# EUROPEAN PATENT APPLICATION

(11) **EP 3 409 132 A1**
(43) Date of publication of application: **05.12.2018**
(21) Application number: 18175029.0
(22) Date of filing: 30.05.2018
(51) Int. Cl.: A23N 5/00, B07B 13/10, A23N 15/10

(54) **SELECTOR DEVICE FOR GOODS SUCH AS DRY FRUITS WITH SHELLS, SEEDS OR LEGUMES**

(30) Priority: 30.05.2017 ES 201730641 U
(71) Applicant: Inno Almond Fly S.L., 25003 Lleida (ES)
(72) Inventor: LA CAGNINA, Salvatore, 93016 RIESI (IT)
(74) Representative: Manresa Val, Manuel

(57) **Abstract**

It comprises a hopper (38) and a device (30) made up of a slope (31) where the shelled seeds, unshelled seeds and shells fall, a curve (33) and a ramp (36), with curve (33) being arranged at the end of slope (31), which comprises a turning point (35) that changes direction lifting goods (32), and with curve (33) ending with ramp (36) where said goods (32) jump, characterized in that hopper (38) is fixed to shift means (209) that move hopper (38) above slope (31), defining different points where goods (32) falls on slope (31).

## Description

Selector device for goods such as dry fruit with shells, seeds or legumes, of the type comprising a hopper, and a device comprising of a slope wherein the shelled seeds, the unshelled seeds and shells fall, a curve and a ramp, with the curve being arranged at the end of the slope, which comprises a turning point that changes direction meanwhile elevating goods, and with the curve ending with the ramp where said goods jump, characterized in that the hopper is fixed to shift means that move the hopper above the slope, defining different drop points for goods on the slope.

### BACKGROUND OF THE INVENTION

Different procedures and machines are known in the state of the art that separate the shell from the seed in dry fruit.

In the state of the art, Spanish Utility Model ES1062627 "MÁQUINA EXTRACTORA-SEPARADORA DE PALOS U OTROS ELEMENTOS DE DESECHO" (Machine for extracting-separating sticks or other waste elements) is known, in the name of JOSE BORRELL S.A., which relates to a machine for extracting-separating sticks or other waste elements, particularly for separating a certain fruit, such as almonds or other similar type ones, with respect to sticks, branches, stones or other foreign objects that accompany the fruit when it is collected, characterized in that it comprises a frame at each end of which it includes a transverse axis, with each transversal axis having a gear on each side associated with each one of its ends, with the wheels on one and the same side being coplanar and mutually aligned, there extending between the gears on each side a chain which can adopt translational movement by virtue of the movement transmitted by the rotation conveyed by a motor gearbox to one of the said transverse axes, and with both chains including, in equidistant positions to that of the inner surfaces thereof, a multiplicity of bearings where transverse bars couple capable of rotation with respect to their axis, each one of which includes a diversity of orthogonal, equidistant rods along its length, and with said rods being a length such that when they move through the upper plane, they rest through gravity on the transverse bar immediately following according to the direction of movement, determining sufficient openings to let the fruit fall towards a lower collection hopper, but retaining the sticks and other foreign bodies, and moving to the vertical position through gravity once the machine's exit end has been reached, thanks to the rotation of the bars, thereby favouring the dragged waste elements falling.

Also, Spanish Patent No. ES2127070 "MÁQUINA LIMPIADORA DE CUERPOS EXTRAÑOS PARA ALMENDRAS Y OTROS FRUTOS SECOS" (Machine for cleaning foreign bodies for almonds and other dry fruit) is known, in the name of Mr. Jose BORRELL COLLADO, relating to a machine for cleaning almonds, provided with a framework, with the upper area for goods entry being supported on the sides by an bottom screen, for earth falling to a lower ramp that connects to the duct to the outside, with the almonds falling from the ramp inside the strainer the bottom of which is made up of the screen with special characteristics, adopting an upward tilted driving plane and air cushion, generated by the turbine, on which axis the transmission from the driving motor is assembled, producing pressurized air within the area, lifting and dropping the stones and foreign bodies through the adjustable port and the clean almonds along the previous ramp, with the turbine taking the air through the side nozzles, with the strainer being driven by the motor, pulleys, transmission, to the pulley, applied to the part, for the movement, having the springs to operate the strainer.

It is worth mentioning a patent in the olive sector, where the machinery could be highlighted, such as Spanish Patent No. ES2003018 "MÁQUINA LIMPIADORA DE ACEITUNAS MEJORADA" (Improved machine for cleaning olives), in the name of Mr. Ildefonso ROSA RAMÍREZ, which describes a machine for cleaning olives, intended for separating and eliminating waste that accompanies said fruit and which is provided, essentially, with a framework including an olive feeding hopper and respective trays for the falling impurities. The cleaning machine comprises essentially respective vibrating strainers that move simultaneously with the trays for falling impurities and which are attached to the machine framework by means of corresponding rods, respective knotter blowers for expelling the waste with separate force transmitting mechanisms, which convey movement to said knotter blowers through a series of pulleys with corresponding belts and with an air deflector arranged near the fruit outlet nozzle with an alternative movement and arranged with a variable and critical tilt.

From INDUSTRIAS JUAN BUSQUETS CRUSAT, S.A. there is Spanish Patent No. ES2069457 "MÁQUINA SEPARADORA DE CASCARA DEL GRANO DE ALMENDRA, FRUTOS SECOS Y GRANOS SIMILARES" (Machine for separating the shell from the almond kernel, dry fruit and similar kernels), relating to a machine that is made up of a tray in a tilted position with a slope towards the outside, there being a raised end section of said tray and a camber from its front or top edge to its rear or bottom outlet edge; there being provided in correspondence with the fruit reception area some air outlet holes for turning the shells, while in correspondence with the most raised side edge a duct has been provided with a plurality of orifices elongated in the transverse direction, through which air that separates the shells from the kernels is projected, with the shells coming out through the outlet away from the clean kernel outlet; said tray is assembled through its front edge on a frame that rests thanks to some elastic supports on a second frame making up the general framework, there being assembled on the first frame an adjustable vibrator.

It is also worth highlighting Spanish Utility Model No. 1011082 "CRIBA SELECCIONADORA ROTATORIA DE DESCARGA LIBRE ADAPTADA A MAQUINAS RECOLECTORAS DE FRUTA SECA DEL TERRENO" (Rotary selecting screen for free unloading adapted to machines for collecting dry fruit from the ground), in the name of TONUTTI, SPA, which describes a rotary selecting screen for free unloading adapted to machines for collecting dry fruit from the ground, characterized by the fact that it is made up of two coaxial strainer-cylinders, fixed to one another and arranged horizontally, there being on each internal side surface thereof at least one helicoidal rib to facilitate the advance movement of the collected material, which is introduced through the base of the innermost strainer-cylinder and is expelled through the opposite base as waste, while the fruit is expelled in the same direction, but from the outer strainer-cylinder, which presents at least two external and circumferential notches distant from each other, preferably trapezoidal, inside which some pulleys move, some of them intended to support the whole screen and one at least located opposite the former, with an appropriate transmission adjustable by a spring and intended to transmit the rotary movement to the screen; when this screen starts to rotate, with double coaxial straining and the collected material is fed in through the base of the innermost strainer, the goods are thrown against the respective side walls and, once selected, they are pushed towards the unloading through the opposite side to the entry.

The present applicant firm has Spanish Patent No. 201430642 (ES2527781) "Procedimiento para la separación de la cascara de las semillas o fruto, dispositivo de cribado y dispositivo seleccionador" (Procedure for separating shells from seeds or fruit, screening device and selection device), from the year 2014, which relates to a procedure for separating the shell from the seed or fruit, screening device and selection device, with said procedure comprising the following stages: seeds or fruit are fed into a splitting machine, the shell is hit and splits, this split seed or fruit shell is transported to the inside of at least one strainer or rotary screen retaining the seeds or fruit with shell and the unsplit seeds or fruit inside it, the strainer rotates moving the goods inside it, and with some of said goods passing through the S- or N-shaped perforations, and falling into some collection means, and the shell and the fruit and seeds with shell separated from the collecting means are transported to a selection device that comprises a slope ending in a curve with a corrugated area and a turning point that leads into a ramp, ending with some classifying means.

It is worth highlighting the selector device for goods like dry fruit with shell, seeds or legumes, which is indicated in this invention, which is the type comprising a slope where shelled seeds, unshelled seeds and shells fall, characterized in that it comprises: a curve at the end of the slope which comprises: a turning point that changes direction meanwhile elevating the goods and at least one corrugated area, wherein said curve is orientated upwards by said turning point to a ramp where said goods jump, and classifying means that classify the goods that jump from the ramp.

Finally, the same applicant company is owner of Spanish Patent of Addition No. 201530879 "DISPOSITIVO SELECCIONADOR DE PRODUCTOS COMO FRUTOS SECOS CON CASCARA, SEMILLAS O LEGUMBRES" (Selector device for goods such as dry fruit with shell, seeds or legumes), from the year 2015, which relates to a selector device for goods such as dry fruit with shell, seeds or legumes, of the type comprising a slope where the shelled seeds, unshelled seeds and shells fall, which comprises: a curve at the end of the slope with comprises a turning point that changes direction lifting the goods, and at least one corrugated area, with the curve ending with a ramp where said goods jump, and some classifying means that classify the goods that jump from the ramp and which is characterized in that it comprises some heating means, located in the curve, which heat said curve.

### BRIEF DESCRIPTION OF THE INVENTION UNDER APPLICATION

This invention is an improvement of the selector device for goods such as dry fruit with shells, seeds or legumes in the above-mentioned invention, in the name of the actual applicant firm.

The inventor, after satisfactory test of the device, has found the elements that improve the performance of said device, as they improve its features.

Therefore, the inventor has observed that, depending on the type of dry fruit, or even varieties within the same dry fruit, the acceleration of the dry fruit has on the slope is different.

Thus, the inventor has solved the problem by controlling the acceleration of the goods.

To control said acceleration the means have been established which allow moving the hopper above the slope, so that, if the hopper is placed at the top of the slope and opens letting the goods fall onto the slope, the goods will have greater acceleration than if this is done at the bottom of the slope, and this redounds in its subsequent classification in the classifying means.

Therefore, the possibility of moving the hopper with respect to the slope allows adapting to different dry fruit, so that starting from the same point on the slope an almond shell does not accelerate the same as a walnut shell, or even within the varieties of one and the same dry fruit, such as almonds.

An object of this invention is a selector apparatus for goods such as dry fruit with shell, seeds or legumes, of the type comprising a hopper, and a device comprising of a slope where the shelled seeds, unshelled seeds and shells fall, a curve and a ramp, with the curve being arranged at the end of the slope, which comprises a turning point that changes direction meanwhile elevating the goods, and with the curve ending with the ramp wherein said goods jump, characterized in that the hopper is fixed to shift means that move the hopper above the slope, defining different drop points for the goods on the slope.

### BRIEF DESCRIPTION OF THE DRAWINGS

In order to facilitate the explanation accompanying this specification there are three sheets of drawings representing a practical embodiment thereof, which is provided as a non-limiting example of the scope of this invention:
- Figure 1 is a front view of the object of the invention with the hopper movement means installed,
- Figure 2 is a schematic detail of the area of the curve,
- Figure 3 is a detail of the suction means, and
- Figure 4 is a side view of the device that is the object of this invention.

### SPECIFIC EMBODIMENT OF THIS INVENTION

First of all, it is necessary to point out that the list of dry fruit goods with shell such as almonds, hazelnuts, walnuts, pistachios, macadamia nuts, Brazil nuts, etc.; seeds of all kinds like cereals, sunflower, apricot seed, etc.; carobs; or legumes of all kind is not limited, because as can be seen both the procedure and the two devices can be applied to a great variety of agricultural goods.

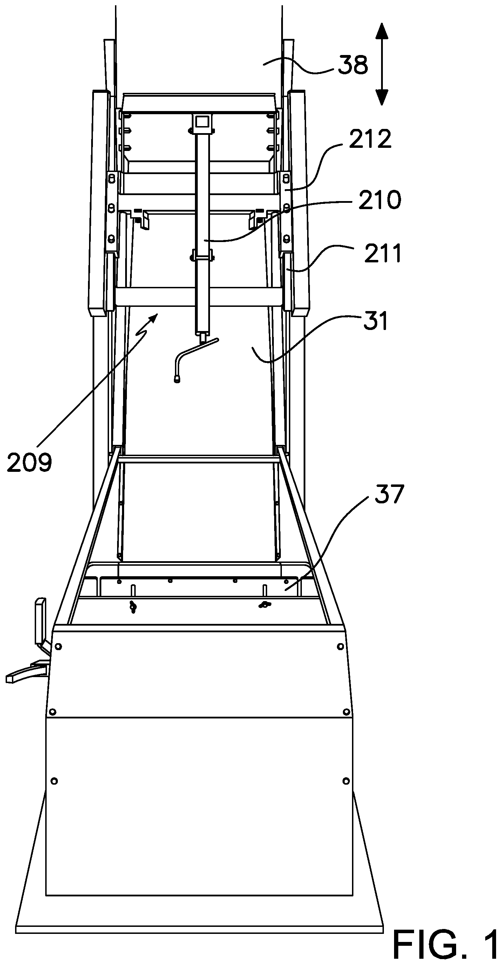

Figure 1 illustrates the slope 31, classifying means 37, a hopper 38, shift means 209 with their threading means 210, sliding means 212 and guides 211.

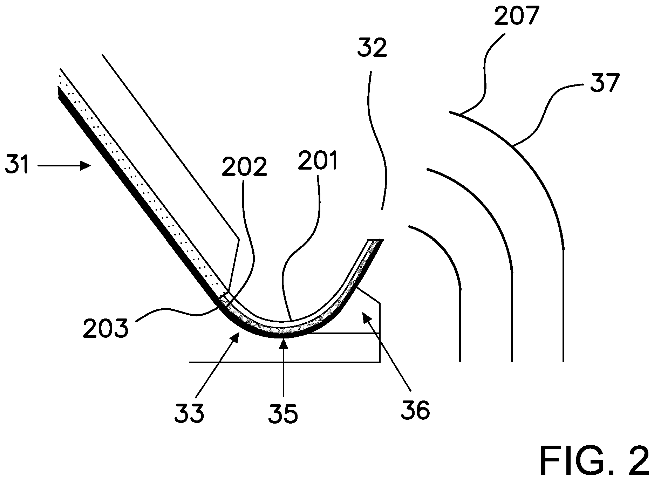

Figure 2 represents a selector device 30, with its slope 31, its curve 33, its ramp 36, goods 32, a turning point 35, classifying means 37 with their curves 207, a first surface 201, a second surface 202 and a third surface 203.

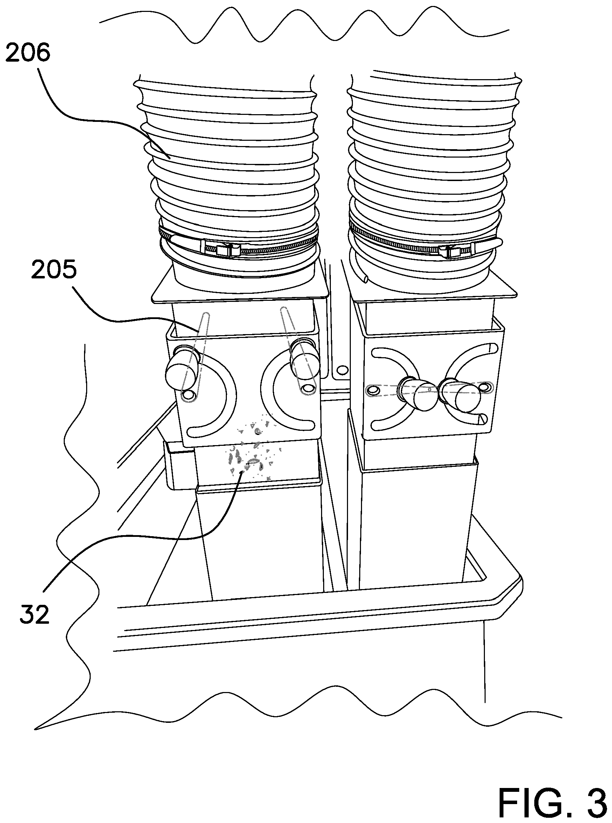

Figure 3 illustrates tubular elements 206, blades 205 and goods 32.

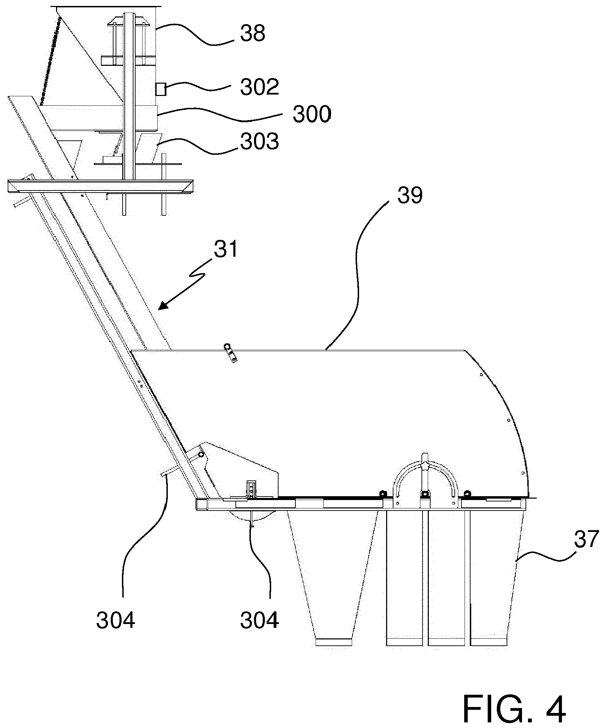

And, Figure 4 shows the slope 31, the classifying means 37, the hopper 38, a feeding tray 300, vibrating means 303, a sensor 302, tilting means 304 and a cover 39.

Thus, in a specific embodiment of this invention, the same, in what is not described, it shall be referred to Patent 201430642 (ES2527781) mentioned above and its family of patents.

The selector device of goods 30 such as dry fruit with shells, seeds, carob or legumes, comprises a slope 31 wherein goods 32 fall, in this specific embodiment shelled seeds, unshelled seeds and shells.

It comprises a curve 33 at the end of the slope 31 that comprises in turn a turning point 35 that changes direction, with curve 33 lifting goods 32.

Curve 33 ends in a ramp 36 where said goods 32 jump.

Also, the device comprises classifying means 37, that classify the goods that jump from the ramp 36.

The device 30 made up of slope 31, curve 33 and ramp 36, comprises a first upper, outer surface 201, made from a sliding material, which is where goods 32 fall and slide. When the doors of hopper 38 are opened, goods 32 fall onto slope 31, specifically onto first surface 201.

The apparatus comprises some shift means 209 for hopper 38 which are fixed to hopper 38. Said hopper 38 is located above slope 31.

In other words, they are shift means 209 that move hopper 38 along slope 31, so that if hopper 38 is placed at the top of slope 31 and it opens letting goods 32 fall onto the top part of slope 31, goods 32 will have a greater acceleration than if hopper 38 is placed at the bottom of slope 31 and hopper 38 opens letting goods 32 fall onto slope 31.

The position of hopper 38 at the top of slope 31 or in a position lower down on slope 31 determines the acceleration of goods 32 on slope 31, and so by regulating said position of hopper 38 with respect to slope 31 it is possible to refine the separation of the goods inside the classifying means 37.

Said shift means 209 fixed to hopper 38, can be made in different ways. For non-limiting example, in this specific embodiment they would be made up of threading means 210 (in this embodiment protected by a tube) which when threaded or unthreaded move sliding means 212, up or down, associated with guides 211 whereby they move. The sliding means 212 are fixed to the threading means 210. When moved up or down they move hopper 38 up and down.

To improve the operability of the apparatus, the inventor has observed that when working with a certain flow of goods 32 on slope 31, the final classifying result is much better.

Therefore, the inventor has arranged a feeding tray 300 for slope 31 that receives goods 32 from hopper 38. Said feeding tray 300 is connected to vibrating means 303 that work by making feeding tray 300 vibrate, when feeding tray 300 reaches a filling level of goods 32, which is the suitable level for allowing the appropriate flow of goods 32 along slope 31.

So, feeding tray 300, thanks to vibration, facilitates goods 32 falling along slope 31 and with said vibrating means 303 stopping if feeding tray 300 is below said filling level, in other words, the optimum level of goods 32 so that when it falling on slope 31 the best classification results are obtained.

Optionally, it has been thought to arrange at least one sensor 302 that detects when feeding tray 300 reaches the predetermined level and activates the vibrating means 303 so that they act to vibrate feeding tray 300 and goods 32 fall along slope 31.

Optionally, curve 33 also has a second, intermediate surface 202, made of anti-vibration material, which is below first surface 201 and a third surface 203.

Third outer, lower surface 203, covers below second surface 202, and provides lower support to second surface 202, leaving said second surface 202 between first surface 201 and third surface 203.

Second surface 202 is made from an anti-vibration material, which optionally can be an elastic material.

First surface 201 can comprise some means for tilting said first surface with respect to second surface 202, making it possible to increase or reduce the falling speed of goods 32.

Also, it would be possible to equally adjust the height of slope 31.

This same aspect could also be extended to ramp 36.

The slope 31 could equally be made like curve 33 or with an equally slippery material but more economical such as a slippery wood reinforced in the rear part thereof with a metal plate.

Optionally, the device comprises suction means 204 (Fig. 3), located before slope 31 or after classifying means 37, whose function is to filter the shells, by sucking them, which weigh less than, for example, the almonds.

Also, optionally, the above-mentioned suction means 204 comprise means for regulating the suction flow rate inside a tubular element 206, in other words, that regulate the suction flow rate.

To this end, they comprise blades 205 which in the rest position are parallel with respect to the direction of the suction flow rate, so that it sucks the shells with greater strength, as there is more air passing.

On the other hand, in the working position of blades 205 they tilt reducing the inner space in tubular element 204, reducing the suction space, reducing the suction power of the suction flow rate regulating means.

So, hopper 38 that stores the goods is positioned above a particular point on slope 31. This is done thanks to threading means 210, which when driven to one side or the other move some sliding means 212, up or down, associated to guides 211 whereby everything fixed to hopper 38 moves. Sliding means 212 are fixed to threading means 210.

This way, if sliding means 212 move upwards, hopper 38 moves upwards and, therefore, goods 32 which fall along slope 31 will have greater acceleration than if the movement of sliding means 212 were produced downwards.

The hopper lets goods 32 fall on slope 31. Said impacts on first surface 201 are dampened by second surface 202, thereby preventing that the glass from which first surface 201 is made from breaking due to the vibrations caused both in slope 31 and in curve 33 or ramp 36.

Also, said first surface 201 can regulate its tilt with respect to the second surface 202, due to the fact that first surface 201 when rotating can press second surface 202 in one area, so that it is possible to regulate the acceleration that goods 32 will have when they exit ramp 36.

It is also possible that first surface 201, second surface 202 and third surface 203 make up a set that is tilted at the same time with respect to slope 31, in other words, the three surfaces tilt with respect to slope 31. This can be achieved by means of tilting means 304 located on the sides of the machines or by means of a handlebar, like a flywheel, located above surfaces 201, 202, 203 which, depending on the direction of the rotation act on some side devices that tilt in one direction or another the three surfaces 201, 202, 203 at once.

Subsequently, second surface 202, as it is elastic, recovers its shape once the pressure from first surface 201 disappears.

The classifying means 37 comprise optionally some curves 207 at the entrance thereof, that facilitate the entry of the respective goods 32 into the suitable place for their classification (fruit, light shells, heavier shells, ...).

Said classifying means 37 could also be made without curves, but with the possibility to regulate the height of each entry to classifying means 37, to facilitate the entry and selection of goods 32 inside thereof.

It has been envisaged that before letting goods 32 fall inside hopper 38, before slope 31, or after being classified, to place some suction means (not shown as located in another area) for filtering the shells. This makes it possible to improve the end product so that it is free of impurities.

Figure 3 shows that the suction means comprise some means for regulating the suction flow rate 205, for example, some blades, inside a tubular element 206, which in the rest position are parallel with respect to the direction of the suction flow rate, so that they suck up more goods.

If it is observed that there are heavier goods (small stones, for example), blades 205 would be placed in the rest position, parallel, increasing the space inside tubular element 205 and also increasing the space for the suction action, and thereby increasing the strength of the suction flow rate regulating means.

This invention describes a new selector apparatus for goods like dry fruit with shell, seeds or legumes. The examples mentioned herein do not limit this invention, and therefore it can have different applications and/or adaptations, all within the scope of the following claims.

## Claims

1. A selector apparatus for goods such as dry fruit with shells, seeds or legumes (32), of the type comprising a hopper (38),and a device (30) comprising a slope (31) wherein the shelled seeds, the unshelled seeds and shells fall, a curve (33) and a ramp (36), with curve (33) being arranged at the end of slope (31), which comprises a turning point (35) that changes the direction meanwhile elevating goods (32), and with the curve (33) ending with the ramp (36) wherein said goods (32) jump, **characterized in that** the hopper (38) is fixed to shift means (209) that move hopper (38) above the slope (31), defining different drop points for goods (32) on slope (31).

2. An apparatus, according to claim 1, **characterized in that** shift means (209) which move hopper (38) with respect to slope (31) comprise threading means (210) such that when threaded or unthreaded move up or move down sliding means (212), associated to guides (211) whereby they move on.

3. An apparatus, according to claim 2, **characterized in that** it comprises a feeding tray (300) for slope (31) which receives goods (32) from hopper (38), with vibrating means (303) for said feeding tray (300) which operate when a sensor (302) detects that feeding tray (300) reaches a filling level of goods (32), allowing goods (32) to fall on slope (31) and stopping said vibrating means (303) if the feed-in tray (300) is below the referenced filling level.

4. An apparatus, according to claim 3, **characterized in that** it comprises at least one sensor 302 which detects when feeding tray 300 reaches the predetermined level and activates vibrating means 303.

5. An apparatus, according to claim 1 or 2 **characterized in that** device (30) comprises a first upper, outer surface (201), made of glass, a second intermediate surface (202), made from anti-vibration material, and a third outer lower surface (203); with second surface (202) being between first surface (201) and third surface (203).

6. An apparatus, according to claim 4, **characterized in that** second surface (202) is made of an elastic material.

7. An apparatus, according to claim 5, **characterized in that** first surface (201) comprises some means for tilting said first surface with respect to the second surface (202).

8. An apparatus, according to claim 5, **characterized in that** first surface (201), second surface (202) and third surface (203) form a set which tilts in turn with respect to slope (31) by means of tilting means (304).

9. An apparatus, according to claim 1 or 2, **characterized in that** the classifying means (37) comprise curves (207) at the entrance thereof.

10. An apparatus, according to claim 1 or 2, **characterized in that** it comprises suction means (204), located before slope (31) or after classifying means (37), that filter shells.

11. An apparatus, according to claim 9, **characterized in that** suction means (204) comprise regulating means for the suction flow rate (205), blades, inside a tubular element (206), wherein said blades 205 in the rest position are parallel with respect to the direction of the suction flow rate and in the working position they tilt reducing the space inside tubular element (206) and reducing the space for suction, reducing the strength of the suction flow rate regulating means.
